# EUROPEAN PATENT APPLICATION

(11) **EP 4 726 831 A1**
(43) Date of publication of application: **15.04.2026**
(21) Application number: 25207100.6
(22) Date of filing: 07.10.2025
(51) Int. Cl.: H01M 10/04, H01M 10/0587

(54) **APPARATUS FOR THE PRODUCTION OF INNER ASSEMBLIES, METHOD FOR THE PRODUCTION OF INNER ASSEMBLIES AND METHOD FOR THE PRODUCTION OF INNER ASSEMBLIES FOR ELECTROCHEMICAL CELLS DESTINED FOR THE PRODUCTION OF BATTERIES**

(30) Priority: 08.10.2024 IT 202400022359
(71) Applicant: G.D S.p.A., 40133 Bologna (IT)
(72) Inventor: BIONDI, Andrea, I-40133 Bologna (BO) (IT); CAVAZZA, Luca, I-40133 Bologna (BO) (IT); BERTONI, Vitale, I-40133 Bologna (BO) (IT); LUZI, Luca, I-40133 Bologna (BO) (IT); FORTINI, Massimo, I-40133 Bologna (BO) (IT); SPARACINO, Giuseppe, I-40133 Bologna (BO) (IT)
(74) Representative: Porta & Consulenti Associati S.p.A.

(57) **Abstract**

An apparatus (100) for the production of inner assemblies, preferably for electrochemical cells destined for the production of batteries, comprises: a movable frame (120), movable along a forming trajectory between a first position and a second position spaced from the first position; a coupling unit (128) comprising at least one forming support (130) mounted on said movable frame (120), said coupling unit (128) being configured to couple at least one web (N1; N2; N3; N4) in an overlapping layers structure onto said forming support (130) to form an inner assembly (1) at least partially while said movable frame (120) is moving between the first position and the second position; an unloading mechanism (145) configured to pick said inner assembly (1) from said forming support (130) at least partially while said movable frame (120) is moving between said first position and said second position, and to release said inner assembly (1) in a predefined release area (146), spaced from said movable frame (120), said unloading mechanism (145) comprising a gripping device (175) configured to grab and hold said inner assembly (1) and a moving device (170) configured to move said gripping device (175) substantially at the same speed and in the same direction as said movable frame (120) at least while said gripping device (175) grabs said inner assembly (1).

## Description

The present invention relates to an apparatus for the production of inner assemblies, to a method thereof for the production of inner assemblies and to a method for the production of inner assemblies for electrochemical cells destined for the production of batteries.

Within the scope of the present description and in the appended claims, "inner assembly" means an object formed by at least one web, or more webs stacked on each other and/or wound on a forming support.

The present invention finds a preferred, although not exclusive, application in the field of the production of electrochemical cells, for example of a cylindrical or prismatic type, for the realization of which an inner assembly is produced with an overlapping layers structure formed by webs wound in the form of a reel or by means of the z-*folding* technique.

An inner assembly of the type referred to in the present description is formed on a forming support on which one or more webs are fed.

For example, the cylindrical electrochemical cells, and certain types of prismatic electrochemical cells, are formed by two electrode webs (positive electrode and negative electrode, respectively) and two separator webs, stacked on each other in an alternated manner, so that one of the two separator webs is interposed between the two electrode webs, and fed to a rotatable forming support, around which they are wound to form an inner assembly for electrolytic cells. Each electrode web is composed of a conductive sheet coated respectively in a positive electrode active material or in a negative electrode active material. Each separator web is instead composed of a layer of dielectric material.

The inner assembly can have various shapes depending on the shape of the forming support on which it is formed. For example, a rotatable forming support generally shaped like a pin leads to the winding of an inner assembly with substantially circular section, for example for the creation of cylindrical electrochemical cells. A rotatable forming support shaped like a plate leads to the winding of an inner assembly with elongated or crushed section, for example elliptical, for the creation of prismatic electrochemical cells.

In the case of an inner assembly formed by wound webs, to form the inner assembly, a plurality of webs are fed from a feeding unit, for example by unwinding them from respective parent reels, they are coupled by superimposing them on each other, they are wound on the forming support and subsequently the wound web is cut to form the inner assembly. The webs can be superimposed upstream of the forming support and fed to the forming support as a single multilayer web or fed individually to the forming support and coupled during winding.

After the formation of the inner assembly, any finishing operations, known per se, can be carried out. For example, each wound web has a free flap that can be fixed, for example by applying an adhesive patch. Subsequently, the forming support is extracted to release the inner assembly.

Documents WO2023203554A1 and EP4439750A1 disclose known examples of apparatuses for the production of electrochemical cells.

The Applicant, in the context of the constant need to increase the performance and the efficiency of production processes, has preliminarily observed how the speed of advancement of the webs relative to the forming support can constitute an important element of limitation to the production capacity. This limitation is even more critical in the event that high precision is required in the formation of the inner assembly. In particular, the Applicant has noted that in many applications, such as for example in the production of electrochemical cells, high precision in the geometry of the inner assemblies must be ensured in order to ensure the required performance of the finished product.

The Applicant has noted that any interruptions and resumption of the advancement of the at least one web produce unwanted reductions in production efficiency and increased wear of the moving parts which are subjected to increased acceleration and deceleration in order to try to compensate for these negative variations in productivity.

The Applicant has therefore found that arranging one or more forming supports on a movable frame, moving relative to the feeding unit during the feeding of the webs and the formation of the inner assembly, allows to simplify the feed of the webs, for example by maintaining a substantially constant speed and/or feed direction from the feeding unit, thus allowing to increase the production efficiency.

The Applicant has observed that in order to be able to implement production cycles of inner assemblies that follow each other, it is necessary to remove the inner assembly made during a production cycle from the forming support, so that the forming support is made available for a new production cycle.

The Applicant has noted that the removal of the inner assembly from the forming support should be carried out without compromising the production efficiency of the apparatus.

The Applicant has perceived that, if it were possible to remove the inner assembly from the forming support without compromising or substantially modifying the motion followed by the movable frame during the winding of the webs, it would be possible to make the forming support available for a new production cycle without compromising the production efficiency of the apparatus.

The Applicant has found that, by holding the inner assembly while the movable frame is moving, and by removing the forming support from the inner assembly while the inner assembly is held, the forming support would be made available for a new production cycle without compromising the production efficiency of the apparatus.

The present invention therefore relates to, in a first aspect thereof, an apparatus for the production of inner assemblies, preferably for electrochemical cells destined for the production of batteries.

Preferably, a movable frame is provided. The movable frame is movable along a forming trajectory between a first position and a second position spaced from the first position.

Preferably, a coupling unit is provided. The coupling unit comprises at least one forming support mounted on said movable frame.

Preferably, said coupling unit is configured to couple at least one web in an overlapping layers structure on said forming support to form an inner assembly, preferably at least partially while said movable frame is moving between the first position and the second position.

Preferably, an unloading mechanism is provided. The unloading mechanism is configured to pick said inner assembly from said forming support, preferably at least partially while said movable frame is moving between the first position and the second position.

Preferably, said unloading mechanism is configured to release said inner assembly in a predefined release area spaced from said movable frame.

Preferably, said unloading mechanism comprises a gripping device configured to grab and hold said inner assembly.

Preferably, said unloading mechanism comprises a moving device configured to move said gripping device substantially at the same speed and in the same direction as said movable frame at least while said gripping device grabs said inner assembly.

In a second aspect thereof, the present invention relates to a method for the production of inner assemblies, preferably for electrochemical cells destined for the production of batteries.

Preferably, moving a movable frame between a first position and a second position spaced from the first position is provided.

Preferably, coupling at least one web in an overlapping layers structure on a forming support mounted on said movable frame to form an inner assembly is provided, preferably at least partially while said movable frame is moving between the first position and the second position.

Preferably, picking said inner assembly from said forming support while said movable frame is moving between the first position and the second position is provided.

Preferably, said picking said inner assembly comprises grabbing said inner assembly by means of a gripping device and simultaneously moving said gripping device substantially at the same speed and in the same direction as said movable frame.

Preferably, holding said inner assembly by means of said gripping device is provided at least partially while moving said gripping device up to a predefined release area spaced from said movable frame.

Preferably, moving said gripping device towards a predefined release area spaced from said movable frame and at the same time holding said inner assembly by means of said gripping device is provided.

Preferably, releasing said inner assembly in said release area is provided.

In a third aspect thereof, the present invention relates to a method for the production of inner assemblies for electrochemical cells destined for the production of batteries.

Preferably, moving a movable frame between a first position and a second position spaced from the first position is provided.

Preferably, coupling a plurality of webs in an overlapping layers structure on a forming support mounted on said movable frame to form an inner assembly for electrochemical cells is provided at least partially while said movable frame is moving between the first position and the second position.

Preferably, said plurality of webs comprises a first electrode web, a second electrode web and two separator webs.

Preferably, picking said inner assembly from said forming support is provided while said movable frame is moving between said first position and said second position.

Preferably, said picking said inner assembly comprises grabbing said inner assembly by means of a gripping device and simultaneously moving said gripping device substantially at the same speed and in the same direction as said movable frame.

Preferably, moving said gripping device towards a predefined release area spaced from said movable frame and simultaneously holding said inner assembly by means of said gripping device is provided.

Preferably, releasing said inner assembly in said release area is provided.

Moving the movable frame during the feeding of the at least one web allows to change the feed speed and/or the direction of arrival and/or the position of arrival of the at least one web relative to the forming support without substantially changing the speed of the web in the feeding unit.

The unloading mechanism unloads the inner assembly formed on the forming support in a predefined release area, in which subsequent processing can be carried out on the inner assembly, without requiring the stop of the movable frame.

To unload the inner assembly while the movable frame is moving, the moving device moves the gripping device so as to cancel the relative speed between the gripping device and the inner assembly while the gripping device grabs it.

The movable frame is movable between the first position and the second position. The first position and the second position are spaced apart along a longitudinal direction. Terms such as "longitudinal", "longitudinally" and the like are used with reference to directions parallel to the longitudinal direction or to amounts measured parallel to the longitudinal direction.

By "first longitudinal direction" is meant a longitudinal direction directed from the first position to the second position.

By "second longitudinal direction" is meant a longitudinal direction directed from the second position to the first position.

The forming support extends along a transverse main direction. In the event that the coupling unit is configured to wind the at least one web around the forming support by rotating the forming support around a rotation axis, said rotation axis coincides with said transverse main direction. The main transverse direction is perpendicular to the longitudinal direction.

Terms such as "transverse", "transversely" and the like are used with reference to directions parallel to the main transverse direction or to amounts measured parallel to the main transverse direction.

By the term "web" is meant an object having a first dimension of thickness, a second dimension of width of at least one order of amount, preferably at least two orders of amount, greater than the first dimension, and a third dimension of length of at least one order of amount, preferably at least two orders of amount, greater than the second dimension. Such an object is flexible at least in the third length dimension so that it can be wound or folded on a forming support. A web can be made from a single sheet of material or from a plurality of sheets previously superimposed and coupled together.

With the expression "cancel a relative motion" referring to two elements, it is intended to modify, adapt or control the state of motion of one of the two elements in such a way that it moves substantially at the same speed and in the same direction as the other element, or keep it in a state of stillness when the other element is also in a state of stillness.

The present invention may have, in the first and/or the second and/or the third aspect, at least one of the preferred features described below. Such features may be present individually or in combination with each other, unless expressly stated otherwise, both in the apparatus and in the methods of the present invention.

Preferably, there is provided a feeding unit configured to feed said at least one web to said coupling unit along a respective feed path.

Preferably, feeding said at least one web from a feeding unit along a respective feed path is provided.

Preferably, said at least one web comprises a plurality of webs, even more preferably four webs.

Preferably, said feeding unit is configured to feed a plurality of webs along respective feed paths.

Preferably, said movable frame is movable between said first position and said second position relative to said feeding unit.

Preferably, said first position of the movable frame is proximal to said feeding unit.

Preferably, said second position of the movable frame is distal from said feeding unit.

Preferably, the feeding unit is configured to feed four webs along respective feed paths.

Preferably, feeding at least one web from a feeding unit along a feed path comprises feeding a plurality of webs along respective feed paths, preferably four webs.

Preferably, said plurality of webs comprises a first electrode web, a second electrode web and two separator webs.

In an alternative embodiment, said at least one web is a multilayer web composed of a plurality of overlapping layers.

Preferably, said plurality of layers comprises a first electrode layer, a second electrode layer and two separator layers.

Preferably, said feeding unit is configured to feed said webs on said forming support stacked on each other.

Preferably, feeding said plurality of webs comprises feeding said webs on said forming support stacked on each other.

Preferably, said feeding unit is configured to feed said webs on said forming support with the two separator webs alternated to the two electrode webs.

Preferably, feeding said plurality of webs comprises feeding said webs on said forming support with the two separator webs alternated to the two electrode webs.

Preferably, there is provided a fixed frame.

Preferably, said feeding unit is mounted fixed on said fixed frame.

Preferably, said movable frame is movable relative to said fixed frame between the first position and the second position.

Preferably, said movable frame is slidably movable relative to said fixed frame between the first position and the second position.

Preferably, said movable frame is movable in the longitudinal direction between the first position and the second position.

Preferably, said movable frame is movable in a first longitudinal direction from the first position to the second position.

Preferably, moving said movable frame from the second position towards the first position comprises moving said movable frame in a first longitudinal direction.

Preferably, said movable frame is movable for at least a stretch from the first position to the second position with a speed substantially equal to a feed speed of said at least one web.

Preferably, said movable frame is movable in a second longitudinal direction from the second position to the first position.

Preferably, moving said movable frame from the second position towards the first position is provided.

Preferably, moving said movable frame from the second position towards the first position comprises moving said movable frame in a second longitudinal direction.

Preferably, said second longitudinal direction is opposite to the first longitudinal direction.

Preferably, said at least one web is fed along said feed path by moving said web in a direction having a direct component as the first longitudinal direction.

Preferably, each web is fed along said feed path by moving said web in a direction having a direct component as the first longitudinal direction.

Preferably said movable frame is movable between the first position and the second position in an alternated manner in the first longitudinal direction and in the second longitudinal direction.

Preferably moving said movable frame between the first position and the second position in an alternated manner in the first longitudinal direction and in the second longitudinal direction is provided.

Preferably, reversing a direction of movement of the movable frame at the first position is provided.

Preferably, stopping said movable frame at the first position for a substantially null time interval is provided.

Preferably, reversing a direction of movement of the movable frame at the second position is provided.

Preferably, stopping said movable frame at the second position for a substantially null time interval is provided.

Preferably, said forming support comprises a first pin extended in a transverse direction.

Preferably, said forming support comprises a second pin extended in the transverse direction.

Preferably, arranging one end of said at least one web at an interface between the first pin and the second pin is provided.

Preferably, said coupling unit comprises at least one winding device mounted on said movable frame and configured to wind said at least one web around said at least one forming support.

Preferably, winding said at least one web around said at least one forming support is provided.

Preferably, said winding device is configured to rotate said forming support around a winding axis, preferably transverse.

Preferably, winding said at least one web comprises rotating said forming support around a preferably transverse winding axis.

Preferably, said coupling unit comprises an extraction mechanism configured to extract said forming support from said inner assembly.

Preferably, extracting said forming support from said inner assembly is provided.

Preferably, said extraction mechanism is configured to extract said forming support from said inner assembly at least partially while said movable frame is moving between the first position and the second position.

Preferably, extracting said forming support from said inner assembly is carried out at least partially during said moving a movable frame between a first position and a second position.

Preferably, said winding axis is transverse.

Preferably, in order to extract said forming support from said inner assembly, at least the first pin is moved in a transverse direction.

Preferably, in order to extract said forming support from said inner assembly, the first pin and subsequently the second pin are moved in a transverse direction.

Preferably, said extraction mechanism is configured to move in a transverse direction the first pin and the second pin independently of each other.

Preferably, extracting said forming support from said inner assembly comprises moving in a transverse direction first the first pin and subsequently the second pin.

Preferably, said movable frame is configured to move from the second position towards the first position while winding said at least one web around the forming support.

Preferably, moving said movable frame from the second position towards the first position while winding said at least one web around the forming support is provided.

Preferably the extraction mechanism is configured to extract said forming support from said inner assembly while the movable frame moves in the first longitudinal direction towards the second position and/or while the movable frame is substantially at the second position and/or while the movable frame moves in the second longitudinal direction towards the first position.

Preferably, the extraction mechanism is configured to start extracting said forming support from said inner assembly when the movable frame is moving from the first position to the second position at a distance from the second position lower than 70% of the distance between the second position and the first position, preferably lower than 40%, more preferably lower than 30%.

Preferably the extraction mechanism is configured to complete the extraction of said forming support from said inner assembly when said movable frame is substantially at said second position.

Preferably the extraction mechanism is configured to complete the extraction of said forming support from said inner assembly when the movable frame is at a distance from the second position lower than 30% of the distance between the second position and the first position, preferably lower than 20%, more preferably lower than 10%.

Preferably extracting said forming support from said inner assembly is provided while the movable frame moves in the first longitudinal direction towards the second position and/or while the movable frame is at the second position and/or while the movable frame moves from the second position towards the first position.

Preferably, starting extracting said forming support from said inner assembly is provided when the movable frame is moving from the first position to the second position at a distance from the second position lower than 70% of the distance between the second position and the first position, preferably lower than 40%, more preferably lower than 30%.

Preferably extracting said forming support from said inner assembly comprises completing the extraction of said forming support from said inner assembly when said movable frame is substantially at said second position.

Preferably completing the extraction of said forming support from said inner assembly is provided when the movable frame is at a distance from the second position lower than 30% of the distance between the second position and the first position, preferably lower than 20%, more preferably lower than 10%.

Preferably, said gripping device is configured to hold said inner assembly at least partially while said extraction mechanism extracts said forming support from said inner assembly.

Preferably, holding said inner assembly by means of said gripping device is provided at least partially during said extracting said forming support from said inner assembly.

Preferably, said moving device is configured to move said gripping device substantially at the same speed and in the same direction as said movable frame while said gripping device holds said inner assembly.

Preferably, said moving device is configured to move said gripping device substantially at the same speed and in the same direction as said movable frame at least partially while said extraction mechanism extracts said forming support from said inner assembly.

Preferably, moving said gripping device substantially at the same speed and in the same direction as said movable frame is provided while said gripping device holds said inner assembly.

Preferably, moving said gripping device substantially at the same speed and in the same direction as said movable frame during said extracting said forming support from said inner assembly.

Preferably, said moving device is configured to cancel a relative motion in longitudinal direction between said gripping device and said forming support at least partially while said extraction mechanism extracts said forming support from said inner assembly.

Preferably, cancelling a relative motion in longitudinal direction between said gripping device and said forming support is provided at least partially during said extracting said forming support from said inner assembly.

Preferably, said moving device is mounted on said fixed frame.

Preferably, said moving device is configured to move said gripping device substantially at the same speed and in the same direction as said movable frame while said movable frame transits from the second position.

Preferably, moving said gripping device substantially at the same speed and in the same direction as said movable frame is provided while said movable frame transits from the second position.

In this way there are substantially no relative movements between the gripping device and the inner assembly while the gripping device grabs the inner assembly.

Preferably, moving said gripping device substantially at the same speed and in the same direction as said movable frame is provided at least partially during said extracting said forming support from said inner assembly.

Preferably, said moving device is configured to move said gripping device substantially at the same longitudinal speed and in the same longitudinal direction as said forming support is provided at least partially while said extraction mechanism extracts said forming support from said inner assembly.

Preferably, moving said gripping device is provided substantially at the same longitudinal speed and in the same longitudinal direction as the forming support at least partially during extracting said forming support from said inner assembly.

In an alternative embodiment, said moving device is mounted on said movable frame.

Preferably, said moving device is configured to keep said gripping device substantially stationary relative to the movable frame at least partially while said extraction mechanism extracts said forming support from said inner assembly.

Preferably, keeping said gripping device substantially stationary relative to the movable frame is provided at least partially during extracting said forming support from said inner assembly.

Preferably, said moving device is configured to move said gripping device substantially at the same speed and substantially in the opposite direction of said forming support at least partially while said gripping device releases said inner assembly.

Preferably, moving said gripping device substantially at the same speed and substantially in the opposite direction of said forming support is provided at least partially during said releasing said inner assembly.

In this way there are substantially no relative movements between the inner assembly and the predetermined release area while the gripping device releases the inner assembly.

Preferably, said predetermined release area is defined on said fixed frame.

Preferably, said gripping device is configured to grab said inner assembly while said movable frame is moving from the first position towards the second position.

Preferably, grabbing said inner assembly by means of said gripping device is provided while said movable frame is moving from the first position towards the second position.

Preferably, said extraction mechanism is configured to begin extracting said forming support from said inner assembly while said movable frame is moving from the first position towards the second position.

Preferably, starting extracting said forming support from said inner assembly is provided while said movable frame is moving from the first position towards the second position.

In one embodiment, said extraction mechanism is configured to complete extracting said forming support from said inner assembly while said movable frame is moving from the second position towards the first position.

In one embodiment, completing said extracting said forming support from said inner assembly while said movable frame is moving from the second position towards the first position.

Preferably, said movement mechanism is configured to move said gripping device away from said movable frame and towards the release area subsequent to the extraction of said forming support from the inner assembly and at least partially while said gripping device holds said inner assembly.

Preferably, said moving said gripping device towards a predefined release area spaced from said movable frame is carried out subsequent to said extracting said forming support from said inner assembly.

In an alternative embodiment, said unloading mechanism comprises a holding member mounted on said movable frame.

Preferably, said holding member is configured to hold said inner assembly at least partially while said extraction mechanism extracts said forming support from said inner assembly.

Preferably, said gripping device is configured to grab said inner assembly while said inner assembly is held by said holding member.

Preferably, the holding member is clamp-shaped.

Preferably, holding said inner assembly is provided at least partially while extracting said forming support from said inner assembly by means of a holding member mounted on said movable frame.

Preferably, holding said inner assembly at least partially while extracting said forming support from said inner assembly by means of a holding member mounted on said movable frame comprises clamping said inner assembly by means of said holding member.

Preferably, said holding member is movable between a holding configuration, wherein said holding member is configured to hold said inner assembly wound on said forming support and a disengagement configuration wherein said holding member is configured not to hold said inner assembly wound on said forming support.

Preferably, holding said inner assembly comprises moving said holding member from the disengagement configuration to the holding configuration.

Preferably, said holding member comprises a first arm hinged to said movable frame and comprising a respective gripping portion.

Preferably, said holding member comprises a second arm hinged to said movable frame and comprising a respective gripping portion.

Preferably, at least one of the first arm and the second arm is rotatable to move the holding member from the disengagement configuration to the holding configuration by bringing the respective gripping portions closer to each other.

Preferably, both the first arm and the second arm are rotatable to move the holding member from the disengagement configuration to the holding configuration.

Preferably, at least one of the first arm and the second arm is rotatable to move the holding member from the holding configuration to the disengagement configuration by moving the respective gripping portions away from each other.

Preferably, both the first arm and the second arm are rotatable to move the holding member from the holding configuration to the disengagement configuration.

Preferably, holding said inner assembly comprises bringing respective gripping portions of said holding member closer to each other until contacting an outer surface of said inner assembly.

Preferably, bringing said respective gripping portions closer to each other comprises rotating a first arm comprising one of said gripping portions and/or rotating a second arm comprising the other of said gripping portions.

Preferably, rotating said first arm and rotating said second arm comprise rotating said first arm and second arm in opposite directions to each other.

Preferably, said first arm is rotatable about a first rotation axis.

Preferably, said first arm comprises a radial portion extended radially relative to said first rotation axis.

Preferably, said first arm comprises a transverse portion extended transversely.

Preferably, said first arm comprises an arcuate portion extended circumferentially relative to said first rotation axis.

Preferably said first arm extends from a first end to a second end.

Preferably said first arm is hinged to said movable frame at the first end.

Preferably, said radial portion extends from said first end.

Preferably the gripping portion of the first arm is placed at the second end.

Preferably said arcuate portion extends from the second end.

Preferably said transverse portion extends from the radial portion to the arcuate portion.

Preferably, said second arm is rotatable about a second rotation axis.

Preferably, said second arm comprises a radial portion extended radially relative to said second rotation axis.

Preferably, said second arm comprises a transverse portion extended transversely.

Preferably, said second arm comprises an arcuate portion extended circumferentially relative to said second rotation axis.

Preferably said second arm extends from a first end to a second end.

Preferably said second arm is hinged to said movable frame at the first end.

Preferably, said radial portion extends from said first end.

Preferably the gripping portion of the second arm is placed at the second end.

Preferably said arcuate portion extends from the second end.

Preferably said transverse portion extends from the radial portion to the arcuate portion.

Preferably, said gripping portions comprise a countershaped concave surface and an outer surface of said inner assembly.

Preferably, holding said inner assembly is started while said movable frame moves from the first position towards the second position.

Preferably, holding said inner assembly is started while said movable frame moves from the first position towards the second position.

Preferably, extracting said forming support from said inner assembly is started while said movable frame moves from the first position towards the second position.

Preferably, releasing said inner assembly is provided.

Preferably, releasing said inner assembly comprises moving said holding member from the holding configuration to the disengagement configuration.

Preferably, releasing said inner assembly from said holding member is provided.

Preferably, releasing said inner assembly while said movable frame moves from the second position towards the first position is provided.

In one embodiment, extracting said forming support from said inner assembly is ended while said movable frame moves from the first position towards the second position.

In one embodiment, extracting said forming support from said inner assembly is ended while said movable frame moves from the first position towards the second position.

In one embodiment, extracting said forming support from said inner assembly is ended while said movable frame moves from the second position towards the first position.

Preferably, releasing said inner assembly is carried out after completing extracting said forming support from said inner assembly.

Preferably, there is provided a movable support mounted on the movable frame.

Preferably, said at least one winding device is mounted on said movable support.

Preferably, said at least one forming support is mounted on said movable support.

Preferably, said movable support is configured to move said at least one forming support relative to said movable frame between a winding position and an unloading position.

Preferably, there are provided at least two forming supports mounted on said movable support.

Preferably, there are provided at least three forming supports mounted on said movable support.

Preferably, when one of said forming supports is in the winding position, another of said forming supports is in the unloading position.

Preferably, said movable support is configured to move said at least one forming support relative to said movable frame between a winding position, a finishing position and an unloading position.

Preferably, when one of said forming supports is in the winding position, another of said forming supports is in the finishing position.

Preferably, said at least one winding device is configured to wind said at least one web around the respective forming support in the winding position.

Preferably, said extraction mechanism is configured to extract said forming support from said inner assembly in the unloading position.

Preferably, said holding member is configured to hold said inner assembly in the unloading position.

Preferably, said apparatus is configured to carry out finishing operations on said inner assembly in the finishing position.

Preferably, said apparatus is configured to cut said at least one web in the finishing position.

Preferably, said moving device is mounted directly on said fixed frame.

Preferably, said moving device is mounted on said fixed frame independently relative to said movable frame.

Preferably, said gripping device is configured to grab said inner assembly at least partially while said inner assembly is held by said holding member.

Preferably, grabbing said inner assembly by means of said gripping device is provided at least partially while said inner assembly is held by said holding member.

Preferably, said holding member is configured to release the inner assembly after said gripping device has grabbed said inner assembly.

Preferably, releasing said inner assembly from said holding member is provided after grabbing said inner assembly by means of said gripping device.

Preferably, said holding member is configured to release the inner assembly after said forming support is extracted from said inner assembly.

Preferably, said holding member is configured to release the inner assembly while said movable frame is moving from the second position to the first position.

Preferably, said holding member is configured to release the inner assembly when the movable frame is at a distance from the second position lower than 30% of the distance between the second position and the first position, preferably lower than 20%, more preferably lower than 10%, even more preferably lower than 5%.

Preferably, said moving device is configured to move said gripping device in a synchronized manner with said movable frame.

Preferably, said moving device is configured to move said gripping device substantially at the same speed and in the same direction as said movable frame while said gripping device grabs said inner assembly held by said holding member.

Preferably, said moving device is configured to move said gripping device substantially at the same speed and in the same direction as said movable frame while said gripping device grabs said inner assembly held by said holding member until said holding member releases said inner assembly.

Preferably, said moving device is configured to move said inner assembly up to a predetermined release area.

Preferably, releasing the inner assembly is carried out when the movable frame is at a distance from the second position lower than 30% of the distance between the second position and the first position, preferably lower than 20%, more preferably lower than 10%, even more preferably lower than 5%.

Preferably, grabbing said inner assembly comprises moving said gripping device in a synchronized manner with said movable frame.

Preferably, grabbing said inner assembly comprises moving said gripping device substantially at the same speed and in the same direction as said movable frame while said gripping device grabs said inner assembly and until said holding member releases said inner assembly.

Preferably, said moving device is configured to move said gripping device towards said release area at least partially while said gripping device holds said inner assembly and after said extraction mechanism has completed said extracting said forming support from said inner assembly.

Preferably, said unloading mechanism is configured to start moving said gripping device towards said release area while said movable frame is moving from the second position towards the first position.

Preferably, said forming support comprises at least one first pin extended in a transverse direction and said extraction mechanism is configured to move said at least one first pin in a transverse direction.

Preferably, said gripping device is configured to grab said inner assembly in the unloading position of the respective forming support.

Preferably, said moving device comprises an articulated arm, preferably with two axes. Preferably, the two axes are oriented in the transverse direction.

Preferably, said moving device comprises two gripping portions movable towards and away from each other.

Preferably, said gripping portions are configured to come into contact with a cylindrical outer surface of said inner assembly.

Preferably, said gripping portions are movable with respect to each other in pure translation.

Preferably, said gripping portions are movable with respect to each other without reciprocal rotations.

Preferably, said articulated arm comprises a first end and a second end, wherein said articulated arm is mounted to said fixed frame at said first end and wherein said gripping device is mounted to said articulated arm at said second end.

Additional features and advantages of the invention will be better apparent from the following detailed description of a preferred embodiment thereof, with reference to the appended drawings and provided by way of indicative and non-limiting example, in which:
- figure 1 shows a schematic representation of an apparatus for the production of inner assemblies in accordance with the present invention;
- figure 1A shows a schematic representation of an apparatus for the production of inner assemblies according to a different embodiment in accordance with the present invention;
- figures 2 to 6 show a perspective view of an apparatus for the production of inner assemblies in accordance with the present invention in different operating configurations, with some elements removed to highlight others;

- figures 7 to 11 show detailed views of details of the apparatus of figure 1 in different operating configurations;
- figures 12 and 13 show a perspective view of an apparatus for the production of inner assemblies according to a different embodiment in accordance with the present invention in different operating configurations, with some elements removed to highlight others;

The representations in the attached figures do not necessarily have to be understood in scale and do not necessarily respect the proportions between the various parts.

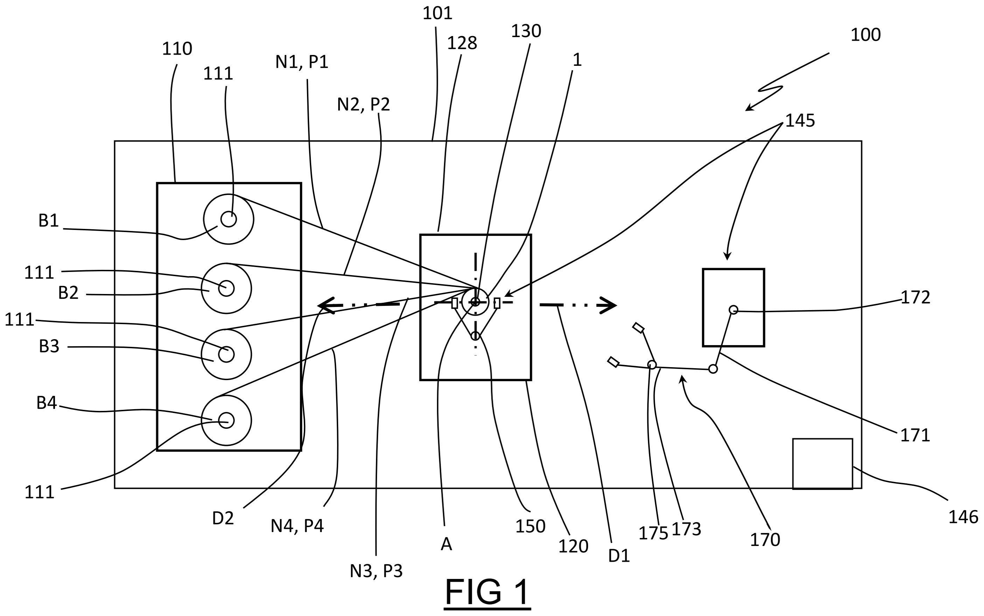

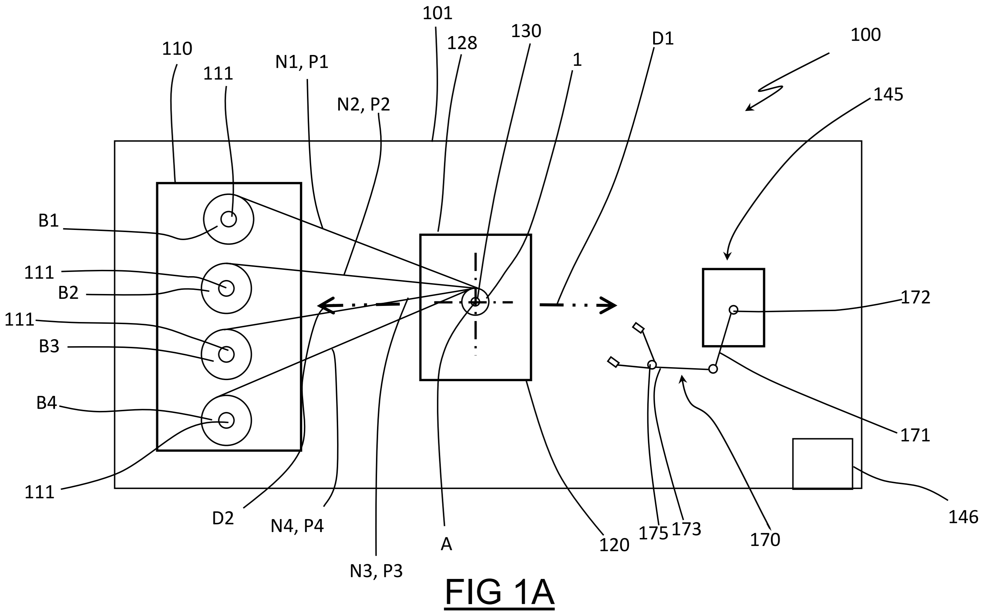

Figure 1 schematically illustrates an apparatus for the production of inner assemblies, generally indicated with reference numeral 100.

The apparatus 100 is destined for the production of inner assemblies 1 composed of at least one wound web. In the preferred example illustrated and described in detail herein, the apparatus 100 is destined for the production of inner assemblies 1 to be used in the manufacture of electrochemical cells. As discussed above, the present invention may, however, find application in inner assemblies of other types, not necessarily destined for the creation of electrochemical cells.

In preferred embodiments, such as that illustrated in figure 1, the assembly 1 is made from a plurality of webs N1, N2, N3, N4. For example, in the case where the inner assembly 1 is used in the context of making an electrochemical cell, the webs may be formed by electrode webs N1, N3 and separator webs N2, N4. These webs N1, N2, N3, N4 are suitably stacked to realize a layered structure in which a first electrode web (for example precursor of the positive electrode of the electrochemical cell), a first separator web, a second electrode web (for example precursor of the negative electrode of the electrochemical cell) and a second separator web alternate each other. The order between the first electrode web and the second electrode web is provided for exemplary purposes only and a sequence opposite to that previously indicated may also be provided.

The apparatus 100 comprises a feeding unit 110, schematically illustrated in figure 1. The feeding unit 110 is configured to feed the webs N1, N2, N3, N4 along respective feed paths P1, P2, P3, P4. In a preferred embodiment, the feeding unit 110 is mounted fixed on a fixed frame 101 of the apparatus 100.

The webs N1, N2, N3, N4, move along the respective feed paths P1, P2, P3, P4 in respective feed directions having respective longitudinal components directed in the same direction.

In the illustrated example, the feeding unit 110 comprises dispensing devices 111 of the webs N1, N2, N3, N4 which may be reel supports configured to unwind the webs N1, N2, N3, N4 from large reels B1, B2, B3, B4 and subsequently fed during operation of the apparatus 100. The dispensing devices 111 may further comprise respective actuators (not illustrated) adapted to rotate the reels B1, B2, B3, B4 about respective rotation axes.

Without loss of generality, further processing and/or movement steps of the webs N1, N2, N3, N4 can be provided between unwinding and feed along the respective feed paths P1, P2, P3, P4.

Although the present description and figure 1 refer to the particular case of a feeding unit 110 configured to unwind and feed four webs N1, N2, N3, N4, of a type suitable for the production of electrolytic cells, the feeding unit can be configured to feed even a single web along a respective feed path or a plurality of webs in a number other than four along respective feed paths. In further embodiments, the web or the webs are further not limited to the case of the production of electrolytic cells and may be of different materials than the electrode webs and the separator webs described above.

When in the continuation of the present description, characteristics and components of the apparatus 100 are described with reference to the four webs N1, N2, N3, N4, of the embodiment of figure 1, this characteristic or component can, without loss of generality, be adapted to perform the same function described also in the event that the inner assembly 1 is made from a single web or from a plurality of webs in different numbers.

The apparatus 100 comprises a movable frame 120. The movable frame 120 is movable relative to the feeding unit 110. In particular, the movable frame 120 is slidably mounted relative to the fixed frame 101 of the apparatus 100. The movable frame 120 is movable between a first position and a second position relative to the feeding unit 110 along a forming trajectory. The first position and the second position are longitudinally spaced apart. In the first position, the movable frame 120 is closer to the feeding unit 110 than in the second position.

The forming trajectory may have various shapes. In the illustrated preferred embodiment, the movable frame 120 is configured to move between the first position and the second position in a rectilinear manner. The movable frame 120 is configured to move from the first position to the second position and thereafter from the second position to the first position in an alternated manner, preferably substantially without stopping. The movable frame 120 is movable from the first position to the second position in a first longitudinal direction D1 directed away from the feeding unit 110. The longitudinal components of the feed directions of the webs N1, N2, N3, N4 along the respective feed paths P1, P2, P3, P4 are directed in the first longitudinal direction D1. The movement speed of the movable frame from the first position to the second position is substantially equal to the feed speed of the webs N1, N2, N3, N4.

The movable frame 120 is further movable from the second position to the first position in a second longitudinal direction D2 directed towards the feeding unit 110. The second longitudinal direction D2 is opposite to respective longitudinal components of the feed directions of the webs N1, N2, N3, N4 along the respective feed paths P1, P2, P3, P4.

Sliding guides, not illustrated, may be provided between the movable frame 120 and the fixed frame 101 to guide the sliding of the movable frame 120 relative to the fixed frame. The apparatus 100 may further provide one or more actuators, not illustrated, to move the movable frame 120 between the first position and the second position.

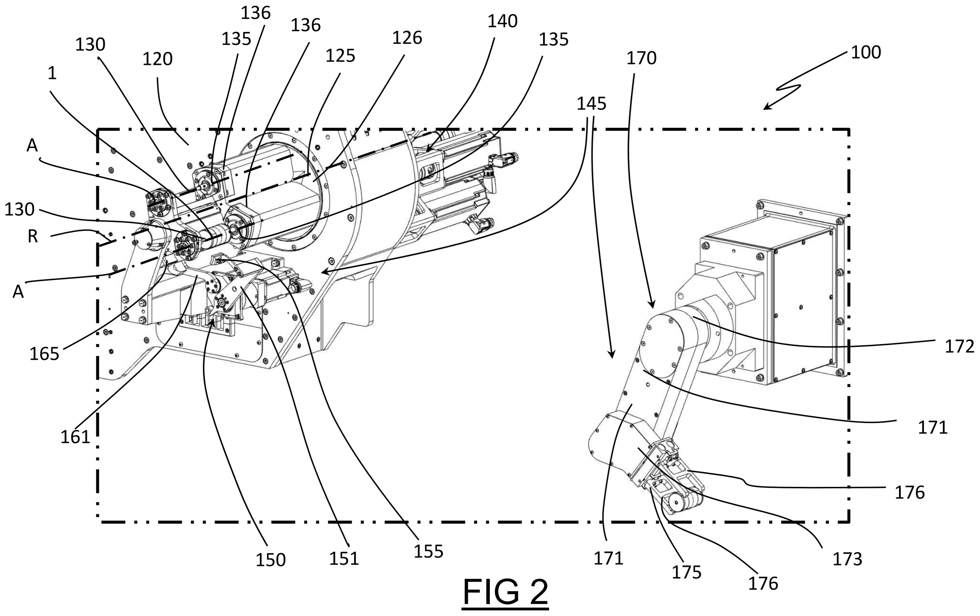

A movable support 125 is mounted on the movable frame 120, the movable support 125 is illustrated in figures 2-6, while it is omitted for the sake of simplicity from figure 1, which is schematic. In the preferred embodiment, the movable support 125 comprises a wheel 126 rotatably mounted on the movable frame 120. The wheel 126 is rotatable about a rotation axis R. The rotation axis R is oriented transversely. An actuator, not illustrated, is provided for rotatably actuating the movable support 125 relative to the movable frame 120.

A coupling unit 128 is configured to couple the webs N1, N2, N3, N4 together.

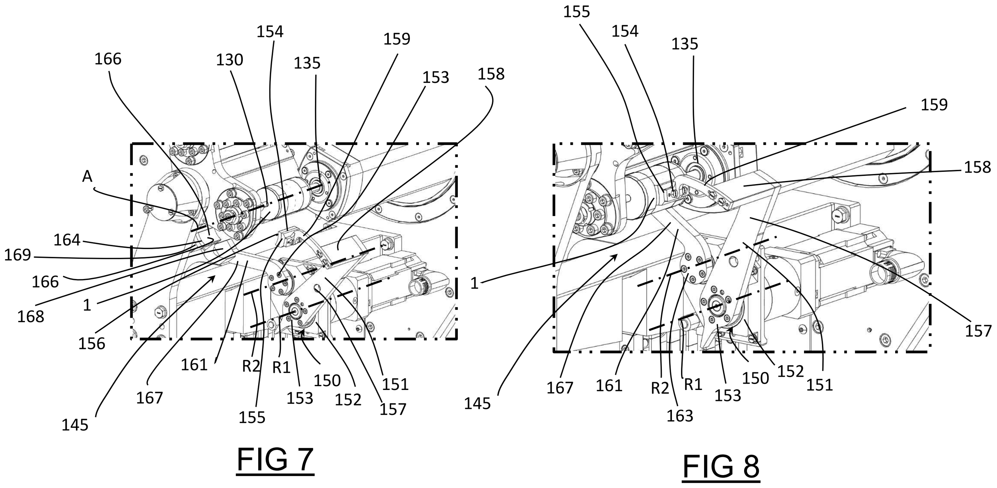

The coupling unit 128 comprises at least one forming support 130 mounted on the movable frame 120. Preferably, the coupling unit 128 comprises a plurality of forming supports 130. In the embodiment illustrated in Figures 2-10, the coupling unit 128 comprises three forming supports 130. In embodiments not illustrated, the coupling unit 128 may comprise a single forming support 130 or a plurality of forming supports 130 in a number other than three.

Preferably, the forming supports 130 are mounted on the movable support 125. The movable support 125 is configured to move each forming support 130 relative to the movable frame 120 between a winding position, a finishing position, and an unloading portion. In the embodiment illustrated in figures 2-10, the winding position, the finishing position, the unloading portion are placed along a circular trajectory, on the movable frame 120, angularly spaced from each other. Preferably, the winding position, the finishing position, the unloading position are angularly equidistant from each other.

The movable support 125 is configured to move each forming support 130 in succession from the winding position to the finishing position, from the finishing position to the unloading position, and from the unloading position to the winding position. In the illustrated embodiment, the movable support 125 is configured to maintain each forming support 130 fixed or substantially fixed relative to the movable frame 120 as the movable frame 120 moves from the first position to the second position and as the movable frame 120 moves from the second position to the first position.

In the embodiment illustrated in figures 2-10, the movable support 125 is configured to move each forming support 130 between two successive positions, between the winding position, the finishing position and the unloading portion, while the movable frame 120 is moving from the first position to the second position. Preferably, the movable support 125 is configured to complete the movement of each forming support 130 between two successive positions before the movable frame 120 has arrived at the second position. In the preferred embodiment, the movable support 125 is configured to move each forming support 130 between two successive positions by rotating a predetermined angle about the rotation axis R. In the illustrated embodiment, the predetermined angle is equal to the angle that distances two successive forming supports 130 relative to the rotation axis R, for example 120°.

The forming supports 130 are movable relative to the fixed frame 101 along a movement path determined by the resultant of the movement of the movable frame 120 between the second position and the first position and of the support frame 125 between the winding position, the finishing position and the unloading portion.

For each forming support 130, a winding device 135 is mounted on the movable frame 120. In the embodiment illustrated in figures 2-10, three winding devices 135 are provided. Each winding device 135 is configured to rotate the respective forming support 130 about a transverse winding axis A. Each winding device comprises a rotating actuator 136.

The coupling unit 128 is configured to convey on each forming support 130, in succession, an end of at least one of the webs N1, N2, N3, N4. The forming support 130 is rotated around the winding axis A to wind the webs N1, N2, N3, N4 and form the inner assembly 1, driven by the winding device 135.

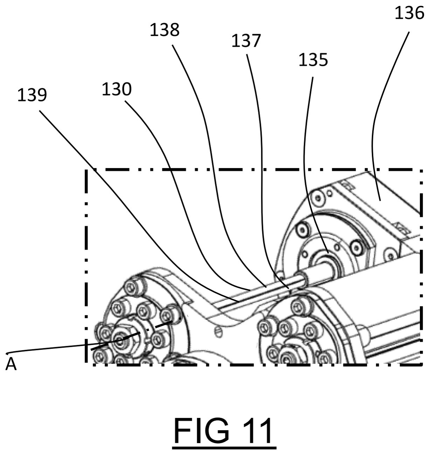

The forming support 130, illustrated in detail in figure 11, comprises a first pin 137 extended transversely and a second pin 138 extended transversely and side by side with the first pin 137. The forming support 130 is configured to engage and hold at least one of the webs N1, N2, N3, N4 at an interface 139 between the first pin 137 and the second pin 138.

An extraction mechanism 140 is configured to extract the forming support 130 from the inner assembly 1 formed around the forming support 130. The extraction mechanism 140 is configured to transversely move the first pin 137 and the second pin 138 independently of each other. The extraction mechanism 140 is configured to move the first pin 137 and the second pin 138 from a respective operating position to a respective non-operating position. In the operating position the first pin 137 and the second pin 138 are configured to engage at least one of the webs N1, N2, N3, N4, to form the inner assembly 1. In the non-operating position, the first pin 137 and the second pin 138 are configured not to engage the webs N1, N2, N3, N4. Preferably, the forming support 130 has a tapered shape to facilitate the extraction thereof. At least one of the first pin 137 and the second pin 138 has a tapered shape. Preferably, the interface 139 extends along a plane inclined relative to the transverse direction, to facilitate the extraction of the forming support 130. To facilitate the extraction of the forming support 130, the extraction mechanism 140 is configured to start the extraction of the first pin 137 and, subsequently, start the extraction of the second pin 138 after a predetermined time interval.

In embodiments not illustrated, the forming support 130 can have different shapes, known per se. For example, in the case where the apparatus 100 is configured to make prismatic-type electrolytic cells, the forming support 130 may have a plate-like shape. In embodiments not illustrated, the forming support 130 may be monolithic.

The inner assembly 1 is formed, in a manner known per se, around the forming support 130 by rotating the forming support 130 around the winding axis while at least one of the webs N1, N2, N3, N4 is held. The at least one of the held webs is inserted into the interface 139 between the first pin 137 and the second pin 138.

Each forming device 130 is configured to receive the webs N1, N2, N3, N4 in the respective winding position. Feed members, not illustrated, are configured to feed the webs N1, N2, N3, N4 to the forming support 130 in a manner known per se, so that the forming support 130 receives at least one of the webs N1, N2, N3, N4 between the first pin 137 and the second pin 138.

The winding device 135 is configured to wind the webs N1, N2, N3, N4 around the forming support 130 while the movable frame 120 is moving towards the first position from the second position and while the forming support 130 is in the winding position.

As a result of the winding of the webs N1, N2, N3, N4, the inner assembly 1 is formed around the forming support 130, still joined to portions of the webs N1, N2, N3, N4 placed along the respective feed paths P1, P2, P3, P4 and coming from the feeding unit 110. The support frame 125 is configured to move the forming support 130 with the inner assembly 1 formed therearound from the winding position to the finishing position, preferably while the movable frame 120 is moving from the first position towards the second position.

Cutting members, not illustrated, are configured to cut the webs N1, N2, N3, N4 in a manner known per se to separate the inner assembly 1 from the portions of the webs N1, N2, N3, N4 placed along the respective feed paths P1, P2, P3, P4. In the illustrated embodiment, the cutting of the webs N1, N2, N3, N4 occurs when the forming support 130 around which the inner assembly 1 is wound is in the finishing position.

Further finishing members known per se, not illustrated, may be provided to perform finishing operations on the inner assembly 1 while the respective forming support 130 is in finishing position. For example, one end of the web portions composing the inner assembly 1 may be fixed by applying an adhesive patch to the outer surface of the inner assembly 1.

The apparatus 100 is configured to perform cutting and finishing of the inner assembly 1 while the movable frame 120 moves from the first position to the second position and/or thereafter from the second position to the first position.

The forming support 130 with the inner assembly 1 formed around the respective forming support 130, after the finishing operations, is movable from the finishing position to the unloading position, preferably while the movable frame 120 is moving from the first position towards the second position.

The apparatus 1 comprises an unloading mechanism 145 configured to pick up the inner assembly 1 from the respective forming support 130 and to transfer the inner assembly 1 to a predetermined release area 146, spaced from the movable frame.

In a first embodiment, illustrated in figures 1 and 2-11, the unloading mechanism 145 comprises a holding member 150 mounted on the movable frame 120. The holding member 150 is configured to hold the inner assembly 1 while the respective forming support 130 is extracted by means of the extraction mechanism 140. In the illustrated embodiment, the holding member 150 is clamp-shaped.

The holding member 150 comprises a first arm 151 hinged to a mounting support 152 mounted fixedly on the movable frame 120. The mounting support 152 is mounted on the movable frame in proximity to the movable support 125. The first arm 151 is rotatable relative to the movable frame 120 about a first transverse rotation axis R1. Preferably, the first arm 151 is made as a single block without joints. The first arm 151 extends from a first end 153 to a second end 154. At the first end 153, the first arm 151 is hinged to the mounting support 152. At the second end 154, the first arm 151 comprises a gripping portion 155 configured to come into contact with the inner assembly 1. The gripping portion 155 comprises a concave surface 156. The concave surface 156 is counter-shaped to a cylindrical outer surface portion of the inner assembly 1.

The first arm 151 comprises a radial portion 157 extended from the first end 153 in a radial direction relative to the first rotation axis R1. The first arm 151 further comprises an arcuate portion 158 extending substantially circumferentially from the gripping portion 155 relative to the first rotation axis R1. The first arm 151 further comprises a transverse portion 159 extending substantially transversely between the arcuate portion 158 and the radial portion 157 to transversely offset the gripping portion 155 from the radial portion 157.

The holding member 150 comprises a second arm 161 hinged to the mounting support 152. The second arm 161 is rotatable relative to the movable frame 120 about a second transverse rotation axis R2. Preferably, the second arm 161 is made as a single block without joints. The second arm 161 extends from a first end 163 to a second end 164. At the first end 163, the second arm 161 is hinged to the mounting support 152, preferably adjacent to the first end 153 of the first arm 151. At the second end 164, the second arm 161 comprises a gripping portion 165 configured to come into contact with the inner assembly 1. The gripping portion 165 comprises a concave surface 166. The concave surface 166 is counter-shaped to a cylindrical outer surface portion of the inner assembly 1. The concave surface 166 of the gripping portion 165 of the second arm 161 faces the concave surface 156 of the gripping portion 155 of the first arm 151.

The second arm 161 comprises a radial portion 167 extended from the first end 163 in a radial direction relative to the second rotation axis R2. The second arm 161 further comprises an arcuate portion 168 extending substantially circumferentially from the gripping portion 165 relative to the second rotation axis R2. The second arm 161 further comprises a transverse portion 169 extending substantially transversely between the arcuate portion 168 and the radial portion 167 to transversely offset the gripping portion 155 from the radial portion 157.

The holding member 150 is movable between a holding configuration and a disengagement configuration. The holding member 150 is movable between the holding configuration and the disengagement configuration by means of a rotation of the first arm 151 about the first rotation axis R1 and a rotation in the opposite direction of the second arm 161 about the second rotation axis R2. In the illustrated embodiment, the first arm 151 rotates clockwise from the holding configuration to the disengagement configuration and counterclockwise from the disengagement configuration to the holding configuration. The second arm 161 rotates counterclockwise from the holding configuration to the disengagement configuration and clockwise from the disengagement configuration to the holding configuration.

In the holding configuration the gripping portion 155 of the first arm 151 and the gripping portion 165 of the second arm 161 are in contact with the inner assembly 1 wound on the forming support 130 of a forming support 130 in the unloading position, at opposite sides of the inner assembly 1. The holding member 150 is configured to press the gripping portions 155, 165 against the inner assembly 1 with a force that is sufficient to hold the inner assembly 1 in a fixed position relative to the movable support 120 while the forming support 130 is extracted from the inner assembly 1.

In the disengagement configuration the gripping portion 155 of the first arm 151 and the gripping portion 165 of the second arm 161 are spaced from each other more than in the holding configuration and are configured not to engage an inner assembly 1 wound on the forming support 130 of a forming support 130 in the unloading position, or movable from the finishing position to the unloading position, so as not to hold it.

The holding member 150 is configured to move in the holding configuration while the movable frame 120 moves from the first position towards the second position, to grab the inner assembly 1 wound around the forming support 130 of the forming support 130 in the unloading position. The extraction mechanism 140 is configured to extract the forming support 130 from the inner assembly 1 while the inner assembly 1 is held by the holding member 150. This may occur before the movable frame 120 reaches the second position, when the movable frame 120 is at the second position, or when the movable frame 120 is moving from the second position towards the first position. The extraction of the forming support 130 starts while the movable frame 120 is moving from the first position towards the second position and may end while the movable frame 120 is still moving from the first position towards the second position, while the movable frame is substantially at the second position or while the movable frame 120 is already moving from the second position towards the first position.

The unloading mechanism 145 comprises a moving device 170. The moving device 170 is mounted on the fixed frame 101. The moving device 170 is mounted on a side opposite to the feeding unit 110 relative to the movable frame 120. The movable frame 120 moves closer to the moving device 170 by moving from the first position to the second position and moves away from the moving device 170 by moving from the second position to the first position.

The moving device 170 comprises an articulated robotic arm 171, preferably with two degrees of freedom. The articulated arm 171 extends from a first end 172, at which the articulated arm 171 is mounted fixed to the fixed frame 101, to a second end 173.

The unloading mechanism 145 comprises a gripping device 175, preferably mounted to the moving device 170 at the second end 173. The moving device 170 is configured to move the gripping device 175 in the longitudinal direction by articulation of the articulated arm 171.

The gripping device 175 comprises two gripping portions 176 movable towards and away from each other between a gripping configuration, wherein the gripping portions 176 are configured to grab and hold the inner assembly 1 therebetween, and a release configuration wherein the gripping portions 176 are configured to release the inner assembly 1. In the illustrated embodiment, the gripping portions 176 are movable relative to each other in translation only, without reciprocal rotation.

In the first embodiment, the gripping device 175 is configured to grab the inner assembly 1 while the inner assembly 1 is held by the holding member 150. The holding member 150 is configured to move from the holding configuration to the disengagement configuration after the moving device 170 has grabbed the inner assembly 1, for example when the movable frame 120 is substantially at the second position or while the movable frame 120 is moving from the second position to the first position.

The gripping device 175 is configured to grab the inner assembly 1 while the inner assembly 1 is held by the holding member 150. The gripping device 175 is configured to engage portions of the outer surface of the inner assembly not engaged by the gripping portions 155, 165 of the holding member 150. In the illustrated embodiment, the gripping device 175 is configured to engage respective peripheral bands of the outer surface of the inner assembly 1. The gripping portions 155, 165 of the holding member 150 are configured to engage a central band of the outer surface of the inner assembly 1 placed between the peripheral bands.

While the gripping device 175 grabs the inner assembly 1 and before the holding device 150 releases the inner assembly 1, the moving device 170 is configured to move the gripping device 175 so as to hold it at the inner assembly 1, cancelling the relative movement between the gripping device 175 and the inner assembly 1 (and thus between the gripping device 175 and the holding member 150). The moving device 170 is configured to keep the gripping device 175 moving substantially at the same speed and in the same direction as the inner assembly 1 (and thus moving substantially at the same speed and in the same direction as the movable frame 120). In the illustrated embodiment, this movement is obtained by articulation of the articulated arm 171.

After releasing the inner assembly 1 from the holding member 150, the moving device 170 is configured to move the inner assembly 1, held by the gripping device 175, towards the predetermined release area 146 and release the inner assembly 1 into the release area 146.

To produce an inner assembly 1 of the type described above, by means of the first embodiment of the apparatus 100, the movable frame 120 is moved from the second position to the first position to perform a first stroke of the movable frame 120. While the movable frame 120 is moving from the second position to the first position, at least one web, preferably a plurality of webs N1, N2, N3, N4, is fed to the forming support 130. While the movable frame 120 is moving from the second position to the first position, the plurality of webs N1, N2, N3, N4 are wound around the forming support 130, rotating the forming support 130 around the winding axis A. Once the winding is ended, the rotation of the forming support 130 is stopped.

Subsequently, the movable frame 120 is moved from the first position to the second position to perform a second stroke of the movable frame 120. Preferably, the stop time of the movable frame 120 in the first position is substantially null.

During the second stroke, the webs N1, N2, N3, N4 are cut, so as to separate the web portions wound around the forming support 130 to form the inner assembly 1 from the web portions along the feed paths P1, P2, P3, P4.

Subsequently, the movable frame 120 is moved from the second position to the first position to perform a third stroke of the movable frame 120 similar to the first stroke. Preferably, the stop time of the movable frame 120 in the second position is substantially null.

While the movable frame 120 is moving from the first position to the second position, the forming support 130 around which the webs N1, N2, N3, N4 have been wound during the first stroke is moved from the winding position to the finishing position. This movement is preferably concluded before the arrival of the movable frame 120 in the second position.

During the third stroke of the movable frame 120, the webs N1, N2, N3, N4 are wound on a further forming support 130 to start the production of a further inner assembly (not illustrated), the production of which is carried out in a manner similar to that described for the inner assembly 1. The production of the further inner assembly takes place partially simultaneously with respect to that described of the inner assembly 1, temporally offset by the time necessary for the movable frame 120 to perform a stroke from the first position to the second position and from the second position to the first position.

During the second and/or third stroke of the movable frame 120, finishing processings are carried out on the inner assembly 1 wound around the forming support 130 of the forming support 130 in the finishing position.

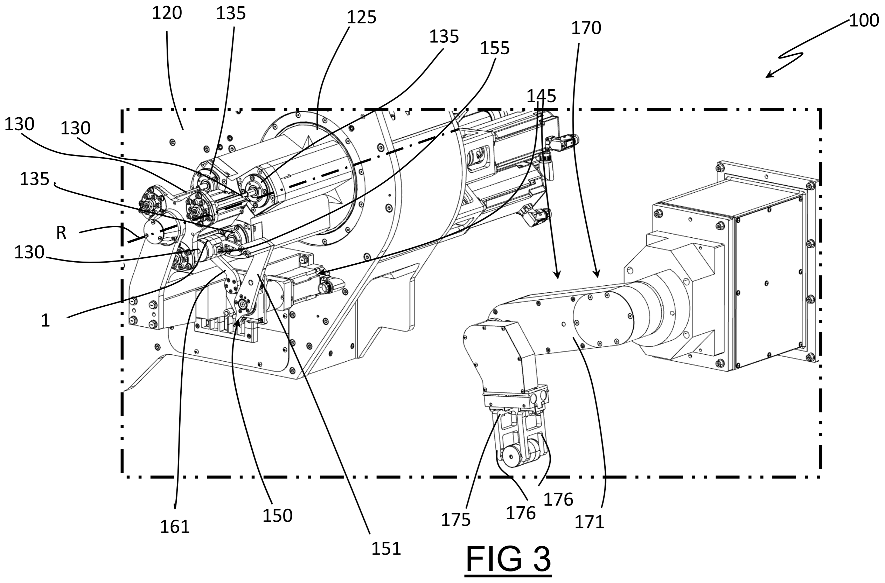

Subsequently, the movable frame 120 is moved from the first position to the second position to perform a fourth stroke of the movable frame 120, illustrated in figures 2 to 4. During the fourth stroke, the assembly 1 is grabbed by means of the holding member 150 and held by the holding member 150. To hold the inner assembly 1, the holding member 150 moves from the disengagement configuration to the holding configuration, as illustrated in figures 3, 7 and 8.

While the movable frame 120 is moving from the first position to the second position, the forming support 130 around which the webs N1, N2, N3, N4 have been wound during the first stroke is moved from the finishing position to the unloading position, as illustrated in figures 2, 7 and 8. This movement is preferably concluded before the arrival of the movable frame 120 in the second position and takes place in a manner similar to that described above from the winding position to the finishing position.

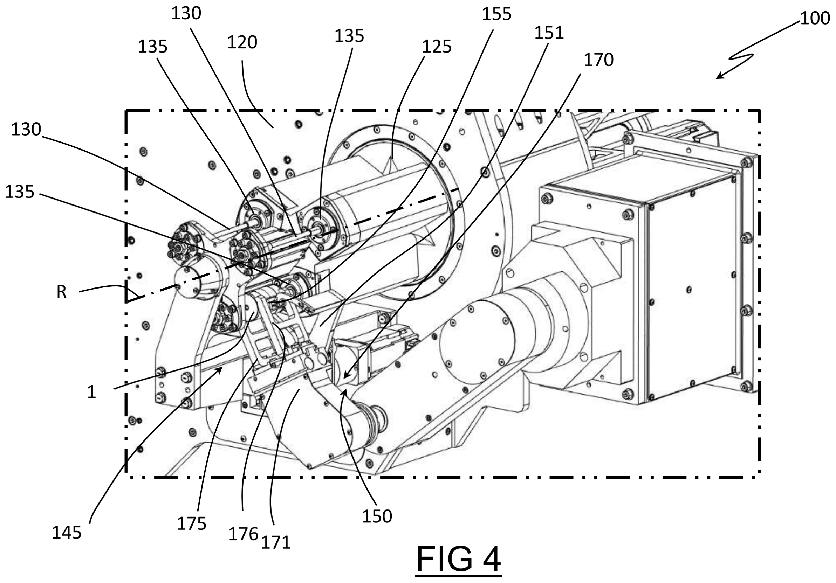

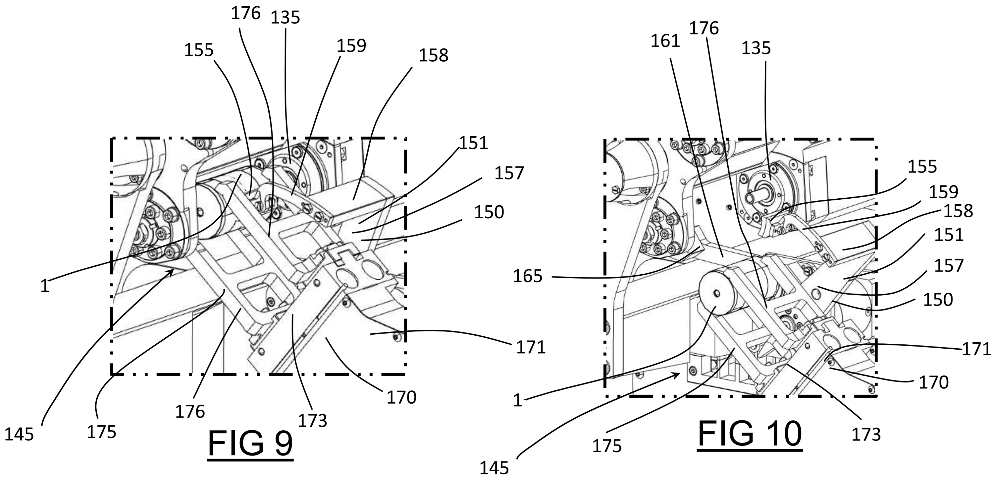

While the movable frame 120 is moving from the first position to the second position and while the assembly 1 is held by the holding member 150, the forming support 130 is extracted from the inner assembly 1, as illustrated in figures 4 and 9.

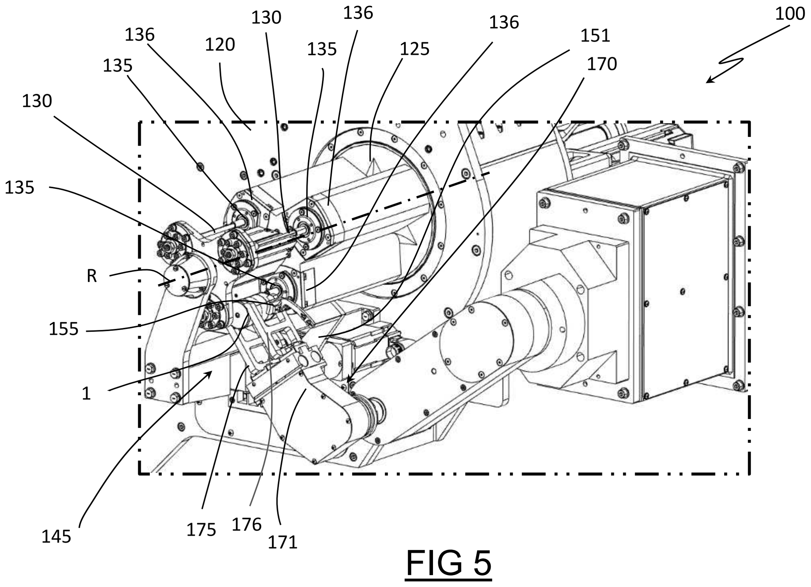

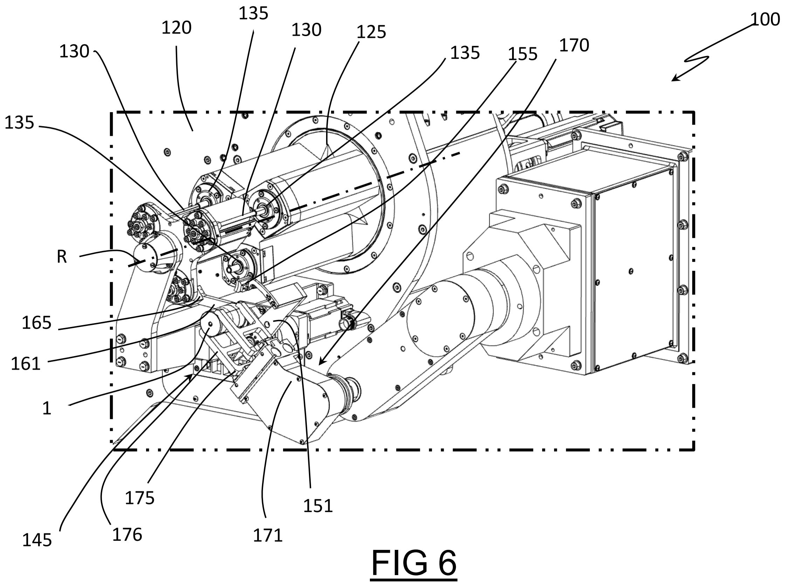

Subsequently, the movable frame 120 is moved from the second position to the first position to perform a fifth stroke of the movable frame 120, similar to the first and third strokes, as illustrated in figures 5 and 6. Preferably, the stop time of the movable frame 120 in the second position is substantially null. The extraction of the forming support 130 from the inner assembly 1 may end before the end of the fourth stroke, substantially at or near the second position, or at the beginning of the fifth stroke.

While the inner assembly 1 is held by the holding member 150, the inner assembly 1 is grabbed, as illustrated in figures 5 and 9. This may occur before the end of the fourth stroke. The inner assembly 1 is grabbed by means of the gripping device 175. To grab the inner assembly 1, the gripping device 175 is brought at the inner assembly 1 and the gripping device 175 is kept at the inner assembly 1 for the time that is necessary for gripping, cancelling the relative movement between the gripping device 175 and the inner assembly 1. To keep the gripping device 175 at the inner assembly 1, the gripping device 175 is moved substantially at the same speed and in the same direction as the inner assembly 1 (and therefore the movable frame 120) by means of the articulated arm 171.

After the forming support 130 is extracted from the inner assembly 1, and after the gripping device 175 has grabbed the inner assembly 1, the inner assembly 1 is released from the holding member 150, as illustrated in figures 6 and 10. To release the inner assembly 1 from the holding member 150, the holding member 150 is moved from the holding configuration to the disengagement configuration, preferably during the fifth stroke of the movable frame 120.

After the inner assembly 1 is released from the holding member 150, the inner assembly 1 held by the gripping device 175 is moved up to the release area 146 by means of the moving device 170, and the inner assembly 1 is released from the gripping device 175.

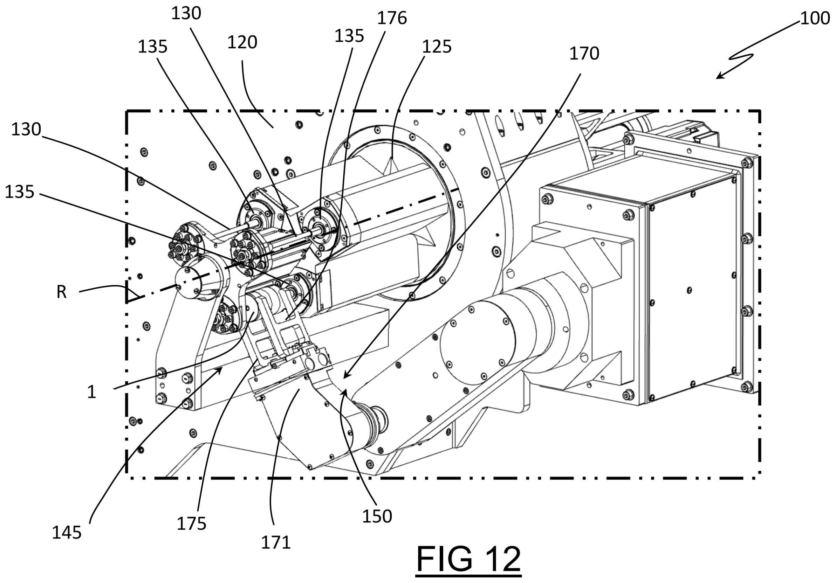

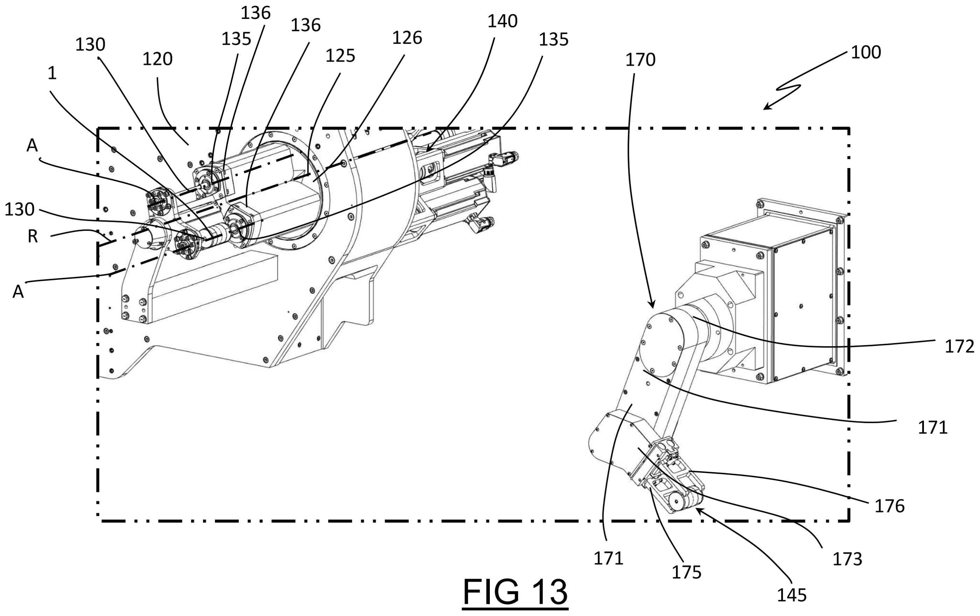

In a second embodiment, illustrated in figures 1A, 12 and 13, the apparatus 100 comprises all the elements described with reference to the first embodiment except for the holding member 150. The second embodiment is similar to the first embodiment except for the elements described below.

In this second embodiment, the gripping device 175 is configured to grab the inner assembly 1 before the extraction mechanism 140 extracts the forming support 130. The gripping device 175 is configured to grab and hold the inner assembly 1 while the movable frame 110 is moving from the first position towards the second position. The gripping device 175 is configured to grab and hold the assembly 1 by engaging its outer surface. The moving device 170 is configured to move the gripping device 175 so as to keep it at the inner assembly 1, cancelling the relative movement between the gripping device 175 and the inner assembly 1. The moving device 170 is then configured to cancel the relative movement in the longitudinal direction between the gripping device 175 and the forming support 130. To this end, the moving device 170 is configured to keep the gripping device 175 moving substantially at the same speed and in the same direction as the inner assembly 1 (and thus moving substantially at the same speed and in the same direction as the movable frame 120) while the gripping device 175 grabs and holds the inner assembly 1. In the illustrated embodiment, this movement is obtained by articulation of the articulated arm 171.

The extraction mechanism 140 is configured to extract the forming support 130 from the inner assembly 1 after the gripping device 175 has grabbed the inner assembly 1, while the inner assembly 1 is held by the gripping device 175 and while the moving device 170 moves the gripping device 175 at the same speed and in the same direction as the movable frame 120.

After extracting the forming support 130 from the assembly 1, the moving device 170 is configured to move the gripping device 175, and the inner assembly 1 held by it, towards the predetermined release area 146. The gripping device 175 is configured to hold the inner assembly up to the release area 146 and to release the inner assembly 1 in the release area 146.

The production of an inner assembly 1 of the type described above, by means of the second embodiment of the apparatus 100 is similar to that described with reference to the first embodiment of the apparatus 100 up to the fourth stroke of the apparatus 100 described above.

In the second embodiment, during the fourth stroke, the assembly 1 is grabbed by means of the gripping device 175 and held by the gripping device 175 while the movable frame 120 is moving from the first position. To grab and hold the inner assembly 1, the gripping device 175 is brought at the inner assembly 1 and the gripping device 175 is maintained at the inner assembly 1 for the time necessary to extract the forming support 120. To keep the gripping device 175 at the inner assembly 1, the relative movement between the gripping device 175 and the inner assembly 1 is cancelled and the gripping device 175 is moved substantially at the same speed and in the same direction as the inner assembly 1 (and therefore the movable frame 120) by means of the articulated arm 171.

While the movable frame 120 is moving from the first position to the second position and while the assembly 1 is held by the gripping device 175, the forming support 130 is extracted from the inner assembly 1.

Subsequently, the movable frame 120 is moved from the second position to the first position to perform a fifth stroke of the movable frame 120, similar to the first and third strokes. Preferably, the stop time of the movable frame 120 in the second position is substantially null. The extraction of the forming support 130 may be concluded before the arrival of the movable frame 120 in the second position or may continue while the movable frame is already moving from the second position towards the first position. In the second case, the moving device 170 moves the gripping device 175 following the reversal of motion of the movable frame 120.

After the forming support 130 is extracted from the inner assembly 1, the inner assembly 1 held by the gripping device 175 is moved up to the release area 146 by means of the moving device 170 and the inner assembly 1 is released by the gripping device 175.

According to an embodiment variant applicable to both the first embodiment and the second embodiment described above, the moving device 170 can be mounted on the movable frame 120 instead of on the fixed frame 101. In this case, to grab the inner assembly 1 the moving device 170 keeps the gripping device 175 stationary relative to the movable frame 120. In the second embodiment, the moving device 170 keeps the gripping device 175 stationary relative to the movable frame 120 while the forming support 130 is extracted from the inner assembly 1 held by the gripping device 175. In this embodiment variant, the gripping device 175 is configured to release the inner assembly 1 at the release area 146 while the movable frame 120 is moving from the second position towards the first position. The moving device 170 is configured to move the gripping device 175 relative to the movable frame 120 so as to maintain the gripping device 175 in a substantially fixed position relative to the release area 146 while the gripping device releases the inner assembly 1 cancelling the relative movement between the gripping device 175 and the release area 146. To keep the gripping device 175 in a substantially fixed position relative to the release area 146, the moving device moves the gripping device 175 with speed equal to the movable frame 120 and opposite direction.

## Claims

1. Apparatus (100) for the production of inner assemblies, preferably for electrochemical cells destined for the production of batteries, comprising:
a movable frame (120), movable along a forming trajectory between a first position and a second position spaced from the first position;
a coupling unit (128) comprising at least one forming support (130) mounted on said movable frame (120), said coupling unit (128) being configured to couple at least one web (N1; N2; N3; N4) in an overlapping layers structure onto said forming support (130) to form an inner assembly (1) at least partially while said movable frame (120) is moving between the first position and the second position;
an unloading mechanism (145) configured to pick said inner assembly (1) from said forming support (130) at least partially while said movable frame (120) is moving between said first position and said second position, and to release said inner assembly (1) in a predefined release area (146), spaced from said movable frame (120), said unloading mechanism (145) comprising a gripping device (175) configured to grab and hold said inner assembly (1) and a moving device (170) configured to move said gripping device (175) substantially at the same speed and in the same direction as said movable frame (120) at least while said gripping device (175) grabs said inner assembly (1).

2. Apparatus (100) according to claim 1, wherein said coupling unit (128) comprises:
at least one winding device (135) mounted on said movable frame (120) and configured to wind said at least one web (N1; N2; N3; N4) around said at least one forming support (130), and
an extraction mechanism (140) configured to extract said forming support (130) from said inner assembly (1) at least partially while said movable frame (120) is moving between the first position and the second position.

3. Apparatus (100) according to claim 2, wherein
said gripping device (175) is configured to hold said inner assembly (1) at least partially while said extraction mechanism (140) extracts said forming support (130) from said inner assembly (1), and
said moving device (170) is configured to move said gripping device (175) substantially at the same speed and in the same direction as said movable frame (120) while said extraction mechanism (140) extracts said forming support (130) from said inner assembly (1).

4. Apparatus (100) according to claim 2 or 3, wherein said gripping device (175) is configured to grab said inner assembly while said movable frame (120) is moving from the first position towards the second position.

5. Apparatus (100) according to claim 2, wherein:
said unloading mechanism (145) comprises a holding member (150) mounted on said movable frame (120), movable between a holding configuration, wherein said holding member (150) is configured to hold said inner assembly wound on said forming support (130), and a disengagement configuration wherein said holding member (150) is configured not to retain said inner assembly (1) wound on said forming support (130);
said extraction mechanism (140) is configured to extract said forming support (130) from said inner assembly (1) at least partially while said holding member (150) holds said inner assembly (1);
said gripping device (175) is configured to grab said inner assembly (1) while said inner assembly (1) is held by said holding member (150);
said moving device (170) is configured to move said gripping device (175) at substantially the same speed and in the same direction as said movable frame (120) at least while said gripping device (175) grabs said inner assembly (1) held by said holding member (150).

6. Apparatus (100) according to any one of claims 2 to 5, wherein the extraction mechanism (140) is configured to start extracting said forming support (130) from said inner assembly (1) when the movable frame (120) is moving from the first position to the second position at a distance from the second position lower than 70% of the distance between the first position and the second position, preferably lower than 40%, more preferably lower than 30%.

7. Apparatus (100) according to any one of claims 2 to 6, wherein said moving device (170) is configured to move said gripping device (175) towards said release area (146) while said gripping device (175) holds said inner assembly (1) and after said extraction mechanism (140) has completed said extracting said forming support (130) from said inner assembly (1).

8. Apparatus (100) according to any one of claims 2 to 7, wherein said moving device (170) is configured to start moving said gripping device (175) towards said release area (146) while said movable frame (120) is moving from the second position towards the first position.

9. Apparatus (100) according to any one of claims 2 to 8, wherein said forming support (130) comprises at least one first pin (137) extended in a transverse direction and said extraction mechanism (140) is configured to move said at least one first pin (137) in a transverse direction at least partially while said inner assembly (1) is held by said unloading mechanism (145).

10. Apparatus (100) according to any one of claims 2 to 9, comprising a movable support (125) mounted on the movable frame (120), said at least one forming support (130) being mounted on said movable support (125);
wherein said movable support (125) is configured to move said at least one forming support (130) relative to said movable frame (120) between a winding position and an unloading position;
wherein said at least one winding device (135) is configured to wind said at least one web around the respective forming support (130) in the winding position of the respective forming support (130);
wherein said extraction mechanism (140) is configured to extract said forming support (130) from said inner assembly (1) in the unloading position of the respective winding device; and
wherein said gripping device (175) is configured to grab said inner assembly (1) in the unloading position of the respective forming support (130).

11. Apparatus (100) according to any one of the preceding claims, wherein said moving device (170) comprises an articulated arm (171).

12. Apparatus according to claim 11, comprising a fixed frame (101), wherein:
said movable frame (120) is movable between the first position and the second position relative to said fixed frame (101);
said articulated arm (171) comprises a first end (172) and a second end (173), wherein said articulated arm (171) is mounted to said fixed frame (101) at said first end (172) and wherein said gripping device (175) is mounted to said articulated arm (171) at said second end (173).

13. Apparatus (100) according to any one of the preceding claims, comprising a feeding unit (110) configured to feed said at least one web (N1; N2; N3; N4) along a feed path (P1; P2; P3; P4), wherein said first position of the movable frame (120) is proximal to said feeding unit (110) and wherein said second position of the movable frame (120) is distal from the feeding unit (110).

14. Method for the production of inner assemblies, preferably for electrochemical cells destined for the production of batteries, comprising:
moving a movable frame (120) between a first position and a second position spaced from the first position;
coupling at least one web (N1; N2; N3; N4) in an overlapping layers structure on a forming support (130) mounted on said movable frame (120) to form an inner assembly (1) at least partially while said movable frame (120) is moving between the first position and the second position;
picking said inner assembly (1) from said forming support (130) while said movable frame (120) is moving between said first position and said second position, said picking said inner assembly (1) comprising grabbing said inner assembly (1) by means of a gripping device (175) and simultaneously moving said gripping device (175) substantially at the same speed and in the same direction as said movable frame (120);
moving said gripping device (175) towards a predefined release area (146) spaced from said movable frame (120) and simultaneously holding said inner assembly (1) by means of said gripping device (175);
releasing said inner assembly (1) in said release area (146).

15. Method for the production of inner assemblies for electrochemical cells destined for the production of batteries, comprising:
moving a movable frame (120) between a first position and a second position spaced from the first position;
coupling a plurality of webs (N1, N2, N3, N4) comprising a first electrode web (N1), a second electrode web (N3) and two separator webs (N2, N4) in an overlapping layers structure on a forming support (130) mounted on said movable frame (120) to form an inner assembly (1) for electrochemical cells at least partially while said movable frame (120) is moving between the first position and the second position;
picking said inner assembly (1) from said forming support (130) while said movable frame (120) is moving between said first position and said second position, said picking said inner assembly (1) comprising grabbing said inner assembly (1) by means of a gripping device (175) and simultaneously moving said gripping device (175) substantially at the same speed and in the same direction as said movable frame (120);
moving said gripping device (175) towards a predefined release area (146) spaced from said movable frame (120) and simultaneously holding said inner assembly (1) by means of said gripping device (175);
releasing said inner assembly (1) in said release area (146).
